# EUROPEAN PATENT APPLICATION

(11) **EP 4 388 855 A1**
(43) Date of publication of application: **26.06.2024**
(21) Application number: 23773165.8
(22) Date of filing: 28.03.2023
(51) Int. Cl.: A01D 41/12, A01D 69/00, A01D 41/06, A01F 12/44, A01D 57/01

(54) **GRAIN COMBINE HARVESTER**

(30) Priority: 28.10.2022 CN 202211334784
(71) Applicant: Weichai Lovol Intelligent Agricultural Technology Co., Ltd., Weifang, Shandong 261206 (CN)
(72) Inventor: WANG, Guimin, Weifang, Shandong 261206 (CN); HE, Song, Weifang, Shandong 261206 (CN); ZHU, Yongfeng, Weifang, Shandong 261206 (CN); ZHU, Xianxue, Weifang, Shandong 261206 (CN); QIN, Yongfeng, Weifang, Shandong 261206 (CN); CHEN, Fangyong, Weifang, Shandong 261206 (CN); LI, Jianxiang, Weifang, Shandong 261206 (CN); WU, Xiaowei, Weifang, Shandong 261206 (CN); HAN, Xinhua, Weifang, Shandong 261206 (CN); QI, Wenzheng, Weifang, Shandong 261206 (CN); ZHENG, Yuenan, Weifang, Shandong 261206 (CN)
(74) Representative: Dehns
(86) International application number: PCT/CN2023/084493
(87) International publication number: WO 2024/087500

(57) **Abstract**

Some embodiments of the present invention provide a grain combine harvester. The grain combine harvester includes a vehicle body, a couple of axial flow cylinders, an engine and a transfer case. The couple of axial flow cylinders are mounted on the vehicle body, the couple of axial flow cylinders are adjacent to each other and disposed in parallel, the engine and the transfer case are mounted on the vehicle body respectively, the engine is connected with the transfer case, and the couple of axial flow cylinders are connected with the transfer case respectively. An integrated transmission case and a built-in wet clutch structure are applied to the cylinder transmission, in this way a traditional belt clutch structure is canceled, the transmission is simplified, and the reliability of the whole harvester is improved. A double longitudinal axial flow threshing and separating system is taken, thereby meeting the requirements of threshing and separation of a crop with large feeding quantity. The arrangement of a large harvester product is facilitated, and the feeding quantity of the harvester is improved.

## Description

### Technical Field

The invention relates to a technical field of harvesters, and in particular to a grain combine harvester.

### Background

A large grain combine harvester is just getting started to develop. A single longitudinal axial flow harvester, a double longitudinal axial flow harvester, a tangential flow and single longitudinal axial flow harvester, and a tangential flow and double longitudinal axial flow harvester are mainly available in the existing technical route of development. The harvest of wheat, corn, soybean and other crops may be realized by replacing and mounting a part of components. In allusion to the harvesters of several existing technical routes, a belt clutch structure is applied to the main transmission, and a functional part of the whole harvester is driven mainly through belt transmission.

The existing belt clutch structure is limited in transmission power, thereby limiting further improvements of the feed quantity and the working efficiency of the harvester.

### Summary

The technical problem to be solved in the present invention is to provide a grain combine harvester in allusion to defects of the related art.

The technical solution of the present invention for solving the above-mentioned technical problem is as follows. A grain combine harvester includes a vehicle body, a couple of axial flow cylinders, an engine and a transfer case. The couple of axial flow cylinders are disposed on the vehicle body, the couple of axial flow cylinders are adjacent to each other and disposed in parallel, the engine and the transfer case are mounted on the vehicle body respectively, the engine is connected with the transfer case, and the couple of axial flow cylinders are connected with the transfer case respectively.

The technical solution of the present invention has the following beneficial effects. A structure including the transfer case and an integrated transmission case is applied to the cylinder transmission. A built-in wet clutch is disposed on the case. The integrated transmission case and the built-in wet clutch are taken, in this way a traditional belt clutch structure is canceled, the transmission is simplified, and the reliability of the whole harvester is improved. A double longitudinal axial flow threshing and separating system meets the requirements of threshing and separation of a crop with large feeding quantity. The arrangement of a large harvester product is facilitated, and the feeding quantity of the harvester is improved.

In some embodiments, the grain combine harvester includes a walking pump, an unloading mechanism, a chopping and grass-discharging mechanism, a header mechanism, a cleaning mechanism, and a grain gathering mechanism, and the transfer case is connected with the walking pump, the unloading mechanism, the chopping and grass-discharging mechanism, the header mechanism, the cleaning mechanism and the grain gathering mechanism respectively.

In some embodiments, the grain combine harvester includes a feeding wheel, and a front portion of the vehicle body is disposed with the feeding wheel, the feeding wheel is connected with the transfer case and adjacent to the couple of axial flow cylinders, the couple of axial flow cylinders are positioned at a middle portion of the vehicle body, and the engine and the transfer case are positioned at a rear portion of the vehicle body.

In some embodiments, the grain combine harvester includes a cylinder transmission case, and the couple of axial flow cylinders are connected with the transfer case through the cylinder transmission case.

In some embodiments, the grain combine harvester includes a gap bridge, a stone gathering slot, a gearbox, a fan, a pushing and conveying auger, a pre-cleaning screen, a returning disc, a grain elevator, an upper screen, a lower screen, a residual elevator, a grass-discharging wheel, a rear bridge, a chopper, an unloading cylinder, an engine post processor, an air filter, a water tank, a grain tank and a cab which are disposed on the vehicle body. The gap bridge, the stone gathering slot, the gearbox, the fan, the pushing and conveying auger and the cab are mounted at the front portion of the vehicle body respectively. The pre-cleaning screen, the returning disc, the grain elevator, the upper screen, the lower screen, the residual elevator, the grass-discharging wheel and the grain tank are mounted at the middle portion of the vehicle body respectively. The rear bridge, the chopper, the unloading cylinder, the engine post processor, the air filter and the water tank are mounted at the rear portion of the vehicle body respectively.

In some embodiments, the stone gathering slot is positioned on a rear side of the gap bridge, the gearbox is positioned below the stone gathering slot, the pushing and conveying auger is positioned below the couple of axial flow cylinders, the fan is positioned below the pushing and conveying auger, the pre-cleaning screen is positioned below a front side of the returning disc, the upper screen is positioned below the returning disc, the lower screen is positioned below the upper screen, the grain elevator and the residual elevator are positioned below the lower screen, the grain elevator is positioned on a front side of the residual elevator, the grass-discharging wheel is positioned beyond the returning disc, the rear bridge and the chopper are positioned below the rear portion of the vehicle body, the water tank, the air filter, the engine post processor and the unloading cylinder are disposed successively from the front portion to the rear portion, the grain tank is positioned beyond the middle portion of the vehicle body, and the cab is positioned beyond the front portion of the vehicle body.

In some embodiments, the grain tank is provided with a first grain tank bottom auger and a second grain tank bottom auger, the pre-cleaning screen is provided with a screen tank drive shaft, the fan, the grain elevator, the chopper, the grass-discharging wheel, the first grain tank bottom auger, the second grain tank bottom auger and the screen tank drive shaft are connected with the transfer case respectively.

In some embodiments, the fan, the grain elevator, the chopper, the grass-discharging wheel, the first grain tank bottom auger, the second grain tank bottom auger and the screen tank drive shaft are powered by the transfer case.

In some embodiments, an extension direction of each axial flow cylinder is consistent in a direction of the vehicle body from a front portion to a rear portion.

In some embodiments, the transfer case is connected with the walking pump, the unloading mechanism, the chopping and grass discharging mechanism, the header mechanism, the cleaning mechanism and the grain gathering mechanism

### Brief Description of the Drawings

The accompanying drawings described herein are used to provide a further understanding of the present invention, and constitute a part of the present invention, the exemplary embodiments of the present invention and the description thereof are used to explain the present invention, but do not constitute improper limitations to the present invention. In the drawings:
Fig. 1 illustrates a schematic structural diagram of a grain combine harvester according to some embodiments of the present invention.
Fig. 2 illustrates an upward view of the grain combine harvester in Fig. 1.
Fig. 3 illustrates a connection relationship diagram of a grass-discharging wheel, a chopper, a first grain tank bottom auger and a second grain tank bottom auger of the grain combine harvester in Fig. 1.
Fig. 4 illustrates a connection relationship diagram of a grain elevator, a grain elevator, a feeding wheel, a fan and a screen tank drive shaft of the grain combine harvester in Fig. 1.
Fig. 5 illustrates a connection relationship diagram of an engine, a transfer case, a walking pump, an unloading mechanism, a chopping and grass-discharging mechanism, a header mechanism, a cleaning mechanism and a grain gathering mechanism of the grain combine harvester in Fig. 1.

Herein, the above-mentioned drawings include the following reference numbers:
1. Gap bridge; 2. Stone gathering slot; 3. Feeding wheel; 4. Gearbox; 5. Axial flow cylinder; 6. Fan; 7. Pushing and conveying auger; 8. Pre-cleaning screen; 9. Returning disc; 10. Grain elevator; 11. Upper screen; 12. Lower screen; 13. Residual elevator; 14. Grass-discharging wheel; 15. Rear bridge; 16. Chopper; 17. Unloading cylinder; 18. Engine post processor; 19. Air filter; 20. Water tank; 21. Engine; 22. Transfer case; 23. Cylinder transmission case; 24. Grain tank; 25. Cab; 26. Vehicle body; 27. First grain tank bottom auger; 28. Second grain tank bottom auger; 29. Screen tank drive shaft; 30. Walking pump; 31. Unloading mechanism; 32. Chopping and grass-discharging mechanism; 33. Header mechanism; 34. Cleaning mechanism; 35. Grain gathering mechanism.

### Detailed Description of the Embodiments

It is to be noted that embodiments in the present invention and features in the embodiments can be combined with each other without conflict. The present invention will be described below in detail with reference to drawings and in combination with the embodiments.

It is to be pointed out that, unless otherwise indicated, all technical and scientific terms used in the present invention have meanings identical with those generally understood by those of ordinary skill in the art of the present invention.

In the present invention, when there is no contrary description available, terms used herein, such as "upper" and "lower" are for directions shown in the drawings, or for the parts in vertical, perpendicular or gravitational directions. Likewise, in order to facilitate understanding and description, terms "left" and "right" are the left and right shown in allusion to the drawings, terms "inner" and "outer" mean the inner and outer relative to an outline of each part, but the above-mentioned terms are not intended to limit the present invention.

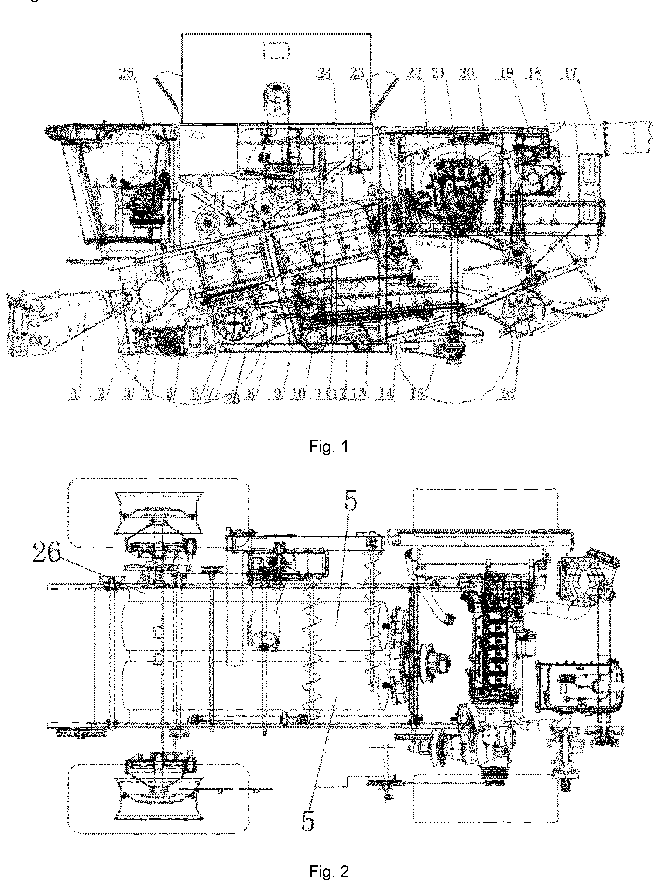

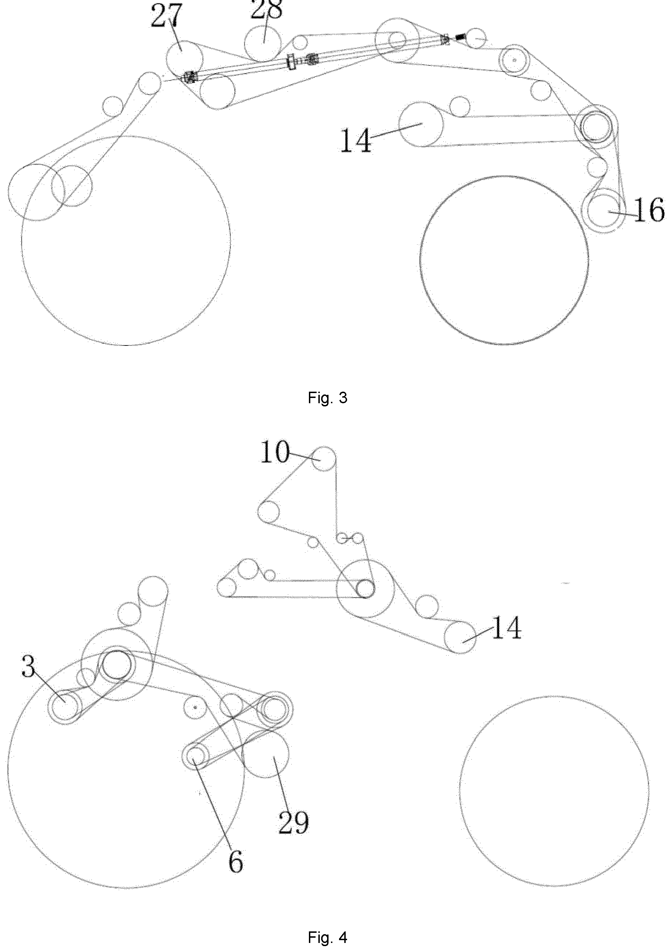

As shown in Figs. 1-5, some embodiments provide a grain combine harvester. The grain combine harvester includes a vehicle body 26, a couple of axial flow cylinders 5, an engine 21 and a transfer case 22. The couple of axial flow cylinders 5 are mounted on the vehicle body 26, the couple of axial flow cylinders 5 are adjacent to each other and disposed in parallel, the engine 21 and the transfer case 22 are mounted on the vehicle body 26 respectively, the engine 21 is connected to the transfer case 22, and the couple of axial flow cylinders 5 are connected to the transfer case 22 respectively.

The technical solution of the present invention has the following beneficial effects. An integrated transmission case structure is applied to the cylinder (the axial flow cylinder 5) transmission. The integrated transmission case and a built-in wet clutch structure are applied to the cylinder transmission, in this way, a traditional belt clutch structure is canceled, the transmission is simplified, and the reliability of the whole harvester is improved. A double longitudinal axial flow threshing and separating system meets the requirements of threshing and separation of a crop with large feeding quantity. The arrangement of a large harvester product is facilitated, and the feeding quantity of the harvester is improved.

In some embodiments, the technical route of "feeding wheel + double longitudinal axial flow" is taken, and the integrated transmission case structure is applied to transmission of a main clutch and the cylinder.

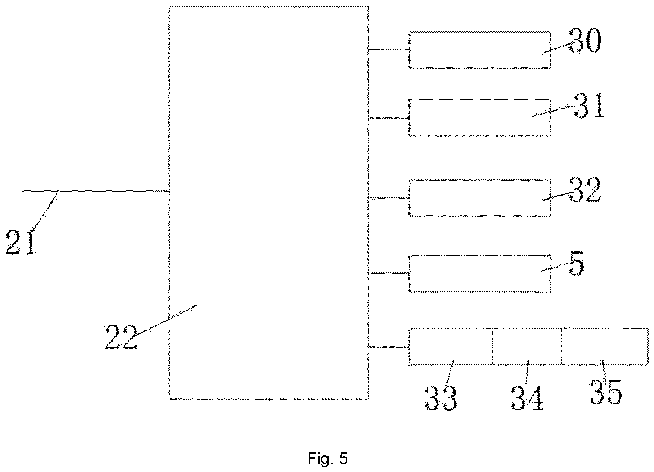

As shown in Fig. 5, the grain combine harvester includes a walking pump 30, an unloading mechanism 31, a chopping and grass-discharging mechanism 32, a header mechanism 33, a cleaning mechanism 34, and a grain gathering mechanism 35, and the transfer case 22 is connected with the walking pump 30, the unloading mechanism 31, the chopping and grass-discharging mechanism 32, the header mechanism 33, the cleaning mechanism 34 and the grain gathering mechanism 35 respectively.

In some embodiments, the engine is directly connected with the transfer case, the transfer case has five paths of outputs, and one path of the cylinder is transmitted to an integrated cylinder transmission case through a stepless speed change wheel.

As shown in Figs. 1-5, the grain combine harvester includes a feeding wheel 3, and a front portion of the vehicle body 26 is provided with the feeding wheel 3, the feeding wheel 3 is connected with the transfer case 22 and adjacent to the couple of axial flow cylinders 5, and the couple of axial flow cylinders 5 are positioned at a middle portion of the vehicle body 26, and the engine 21 and the transfer case 22 are positioned at a rear portion of the vehicle body 26.

In some embodiments, with the adoption of the technical route of "feeding wheel + double longitudinal axial flow", the feeding wheel implements auxiliary feeding and acceleration of the crop, in this way the feeding quantity is improved, and meanwhile the whole harvester works smoothly.

As shown in Figs. 1-5, the grain combine harvester includes a cylinder transmission case 23, and the couple of axial flow cylinders 5 are connected with the transfer case 22 through a cylinder transmission case 23.

In some embodiments, a mode of the transfer case and the integrated cylinder transmission case is applied to main transmission, in this way the transmission route is simple, and the reliability is high.

As shown in Figs. 1-5, the grain combine harvester includes a gap bridge 1, a stone gathering slot 2, a gearbox 4, a fan 6, a pushing and conveying auger 7, a pre-cleaning screen 8, a returning disc 9, a grain elevator 10, an upper screen 11, a lower screen 12, a residual elevator 13, a grass-discharging wheel 14, a rear bridge 15, a chopper 16, an unloading cylinder 17, an engine post processor 18, an air filter 19, a water tank 20, a grain tank 24 and a cab 25 which are disposed on the vehicle body 26. The gap bridge 1, the stone gathering slot 2, the gearbox 4, the fan 6, the pushing and conveying auger 7 and the cab 25 are mounted at the front portion of the vehicle body 26 respectively. The pre-cleaning screen 8, the returning disc 9, the grain elevator 10, the upper screen 11, the lower screen 12, the residual elevator 13, the grass-discharging wheel 14 and the grain tank 24 are mounted at the middle portion of the vehicle body 26 respectively. The rear bridge 15, the chopper 16, the unloading cylinder 17, the engine post processor 18, the air filter 19 and the water tank 20 are mounted at the rear portion of the vehicle body 26 respectively.

In some embodiments, the gearbox is disposed at the front portion of the vehicle body, in this way the maintainability is improved. Due to the design of the structure and the mounting position of the each part of the harvester, mounting and maintenance of the harvester are facilitated, the structure is compact, and the stability and the reliability of the harvester are improved.

As shown in Figs. 1-5, the stone gathering slot 2 is positioned on a rear side of the gap bridge 1, the gearbox 4 is positioned below the stone gathering slot 2, the pushing and conveying auger 7 is positioned below the couple of axial flow cylinders 5, the fan 6 is positioned below the pushing and conveying auger 7, the pre-cleaning screen 8 is positioned below a front side of the returning disc 9, the upper screen 11 is positioned below the returning disc 9, the lower screen 12 is positioned below the upper screen 11, the grain elevator 10 and the residual elevator 13 are positioned below the lower screen 12, the grain elevator 10 is positioned on a front side of the residual elevator 13, the grass-discharging wheel 14 is positioned beyond the returning disc 9, the rear bridge 15 and the chopper 16 are positioned below the rear portion of the vehicle body 26, the water tank 20, the air filter 19, the engine post processor 18 and the unloading cylinder 17 are disposed successively from the front portion to the rear portion, the grain tank 24 is positioned beyond the middle portion of the vehicle body 26, and the cab 25 is positioned beyond the front portion of the vehicle body 26.

In some embodiments, the stone gathering slot is disposed between a gap bridge feeding system and a threshing and cleaning system, in this way stones and other foreign matters that are fed abnormally are collected in advance when the harvester works and accordingly the parts of the main harvester system are protected. Due to the design of the structure and the mounting position of the each part of the harvester, mounting and maintenance of the harvester are facilitated, the structure is compact, and the stability and the reliability of the harvester are improved.

As shown in Figs. 1-5, the grain tank 24 is provided with a first grain tank bottom auger 27 and a second grain tank bottom auger 28, the pre-cleaning screen 8 is provided with a screen tank drive shaft 29, and the fan 6, the grain elevator 10, the chopper 16, the grass-discharging wheel 14, the first grain tank bottom auger 27, the second grain tank bottom auger 28 and the screen tank drive shaft 29 are connected with the transfer case 22 respectively.

In some embodiments, because of arrangement of the transmission route and the transmission and connection relationship of all parts, the transmission connection of all parts is facilitated, loss in the transmission route is reduced, and the stability and the reliability of the harvester are improved. Meanwhile, the transmission is simplified, the number of belts is greatly reduced, and the transmission reliability of the whole harvester is improved.

As shown in Figs. 1-5, the fan 6, the grain elevator 10, the chopper 16, the grass-discharging wheel 14, the first grain tank bottom auger 27, the second grain tank bottom auger 28 and the screen tank drive shaft 29 are connected to the transfer case 22 through a belt respectively.

In some embodiments, because of arrangement of the transmission route and the transmission connection relationship of the each part, the transmission connection of the all parts is facilitated, the loss in the transmission route is reduced, the stability and the reliability of the harvester are improved, and the cost is reduced.

As an alternative solution of the belt, transmission can be implemented through a chain, a gear and the like according to the actual need.

As shown in Figs. 1-5, an extension direction of each axial flow cylinder 5 is consistent in a direction of the vehicle body 26 from a front portion to a rear portion.

In this way, a double longitudinal axial flow threshing and separating system is formed by the above-mentioned arrangement of the couple of axial flow cylinders, and accordingly the requirements of harvesting, threshing and cleaning abilities with the large feeding quantity are satisfied.

As shown in Figs. 1-5, the fan 6, the grain elevator 10, the chopper 16, the grass-discharging wheel 14, the first grain tank bottom auger 27, the second grain tank bottom auger 28 and the screen tank drive shaft 29 are powered by the transfer case 22.

The grain combine harvester of the embodiment of the present invention can be a multifunctional grain combine harvester, the technical route of "feeding wheel + double longitudinal axial flow" is taken, the feeding wheel implements the auxiliary feeding and acceleration of the crop, in this way the feeding quantity is improved and meanwhile the whole harvester works smoothly, and the double longitudinal axial flow threshing separating system meets the requirements of threshing and cleaning with the large feeding quantity.

In some embodiments, the integrated transmission case structure is applied to main transmission of the whole harvester, in this way the traditional belt clutch structure is canceled, the transmission is simplified, and the reliability of the whole harvester is improved.

In some embodiments, the technical route of "feeding wheel + double longitudinal axial flow" and the integrated transmission mode of the main harvester are taken. The engine 21 is directly connected to the transfer case 22, the transfer case 22 has five paths of outputs, and one path of the cylinder (axial flow cylinder 5) is transmitted to the integrated cylinder transmission case 23 through the stepless speed change wheel.

In the embodiment, the technical route of "feeding wheel + double longitudinal axial flow" is taken, in this way the arrangement of the large harvester product is facilitated, and the feeding quantity of the harvester is improved. The mode of the transfer case and the integrated cylinder transmission case is applied to the main transmission, in this way the transmission route is simple, and the reliability is high.

It is to be finally noted that the above-embodiments are used for describing the technical solution of the present invention only and are not intended to limit the present invention. The present invention is described in detail with reference to the above-mentioned embodiments, however those of ordinary skill in the art should understand that they can still modify the technical solution recorded by the above-mentioned embodiments, or equivalently replace part or all technical features thereof. While these modifications or replacements will not make the essence of the corresponding technical solution separate from the scope of the technical solutions of all embodiments of the present invention.

## Claims

1. A grain combine harvester, **characterized by**, the grain combine harvester comprises:
a vehicle body (26);
a couple of axial flow cylinders (5), disposed on the vehicle body (26), the couple of axial flow cylinders (5) being adjacent to each other and disposed in parallel;
an engine (21), mounted on the vehicle body (26); and
a transfer case (22), mounted on the vehicle body (26), the engine (21) being connected with the transfer case (22), and the couple of axial flow cylinders (5) being connected with the transfer case (22) respectively.

2. The grain combine harvester as claimed in claim 1, wherein the grain combine harvester comprises a walking pump (30), an unloading mechanism (31), a chopping and grass-discharging mechanism (32), a header mechanism (33), a cleaning mechanism (34), and a grain gathering mechanism (35), and the transfer case (22) is connected with the walking pump (30), the unloading mechanism (31), the chopping and grass-discharging mechanism (32), the header mechanism (33), the cleaning mechanism (34) and the grain gathering mechanism (35) respectively.

3. The grain combine harvester as claimed in claim 1, wherein the grain combine harvester comprises a feeding wheel (3), and a front portion of the vehicle body (26) is disposed with the feeding wheel (3), the feeding wheel (3) is connected with the transfer case (22) and adjacent to the couple of axial flow cylinders (5), the couple of axial flow cylinders (5) are positioned at a middle portion of the vehicle body (26), and the engine (21) and the transfer case (22) are positioned at a rear portion of the vehicle body (26).

4. The grain combine harvester as claimed in claim 1, wherein the grain combine harvester comprises a cylinder transmission case (23), and the couple of axial flow cylinders (5) are connected with the transfer case (22) through the cylinder transmission case (23).

5. The grain combine harvester as claimed in claim 1, wherein the grain combine harvester comprises a gap bridge (1), a stone gathering slot (2), a gearbox (4), a fan (6), a pushing and conveying auger (7), a pre-cleaning screen (8), a returning disc (9), a grain elevator (10), an upper screen (11), a lower screen (12), a residual elevator (13), a grass-discharging wheel (14), a rear bridge (15), a chopper (16), an unloading cylinder (17), an engine post processor (18), an air filter (19), a water tank (20), a grain tank (24) and a cab (25) which are disposed on the vehicle body (26); the gap bridge (1), the stone gathering slot (2), the gearbox (4), the fan (6), the pushing and conveying auger (7) and the cab (25) are mounted at a front portion of the vehicle body(26) respectively; the pre-cleaning screen (8), the returning disc (9), the grain elevator (10), the upper screen (11), the lower screen (12), the residual elevator (13), the grass-discharging wheel (14) and the grain tank (24) are mounted at a middle portion of the vehicle body (26) respectively; and the rear bridge (15), the chopper (16), the unloading cylinder (17), the engine post processor (18), the air filter (19) and the water tank (20) are mounted at a rear portion of the vehicle body (26) respectively.

6. The grain combine harvester as claimed in claim 5, wherein, the stone gathering slot (2) is positioned on a rear side of the gap bridge (1), the gearbox (4) is positioned below the stone gathering slot (2), the pushing and conveying auger (7) is positioned below the couple of axial flow cylinders (5), the fan (6) is positioned below the pushing and conveying auger (7), the pre-cleaning screen (8) is positioned below a front side of the returning disc (9), the upper screen (11) is positioned below the returning disc (9), the lower screen (12) is positioned below the upper screen (11), the grain elevator (10) and the residual elevator (13) are positioned below the lower screen (12), the grain elevator (10) is positioned on a front side of the residual elevator (13), the grass-discharging wheel (14) is positioned beyond the returning disc (9), the rear bridge (15) and the chopper (16) are positioned below the rear portion of the vehicle body (26), the water tank (20), the air filter (19), the engine post processor (18) and the unloading cylinder (17) are disposed successively from the front portion to the rear portion of the vehicle body (26), the grain tank (24) is positioned beyond the middle portion of the vehicle body (26), and the cab (25) is positioned beyond the front portion of the vehicle body (26).

7. The grain combine harvester as claimed in claim 5, wherein the grain tank (24) is provided with a first grain tank bottom auger (27) and a second grain tank bottom auger (28), the pre-cleaning screen (8) is provided with a screen tank drive shaft (29), and the fan (6), the grain elevator (10), the chopper (16), the grass-discharging wheel (14), the first grain tank bottom auger (27), the second grain tank bottom auger (28) and the screen tank drive shaft (29) are connected with the transfer case (22) respectively.

8. The grain combine harvester as claimed in claim 1, wherein an extension direction of each axial flow cylinder (5) is consistent in a direction of the vehicle body (26) from a front portion to a rear portion.

9. The grain combine harvester as claimed in claim 7, wherein the fan (6), the grain elevator (10), the chopper (16), the grass-discharging wheel (14), the first grain tank bottom auger (27), the second grain tank bottom auger (28) and the screen tank drive shaft (29) are powered by the transfer case (22).

10. The grain combine harvester as claimed in claim 1, wherein, the transfer case (22) is connected with a walking pump (30), an unloading mechanism (31), a chopping and grass-discharging mechanism (32), a header mechanism (33), a cleaning mechanism (34) and a grain gathering mechanism (35).
